# EUROPÄISCHE PATENTSCHRIFT

(11) **EP 1 385 689 B1**
(45) Veröffentlichungstag und Bekanntmachung des Hinweises auf die Patenterteilung: **28.07.2004**
(21) Anmeldenummer: 02708117.3
(22) Anmeldetag: 04.04.2002
(51) Int. Cl.: B29C 47/22, B29C 47/08, B29C 49/04

(54) **EXTRUSIONSKOPF ZUR HERSTELLUNG EINES SCHLAUCH- ODER ROHRFÖRMIGEN KUNSTSTOFFSTRANGES**
EXTRUSION HEAD FOR PRODUCING A PLASTIC STRAND IN THE FORM OF A FLEXIBLE OR RIGID TUBE
TETE D'EXTRUSION POUR LA PRODUCTION D'UN PRODUIT EN MATIERE PLASTIQUE SOUS FORME DE TUYAU FLEXIBLE OU RIGIDE

(30) Priorität: 07.05.2001 CH 8262001
(43) Veröffentlichungstag der Anmeldung: 04.02.2004
(73) Patentinhaber: SOPLAR SA, CH-9450 Altstätten (CH)
(72) Erfinder: MESSNER, Wolfgang, A-6067 Absam (AT)
(74) Vertreter: Schreiber, Wolfgang F.
(86) Internationale Anmeldenummer: PCT/CH2002/000188
(87) Internationale Veröffentlichungsnummer: WO 2002/090086

(56) Entgegenhaltungen:
- FR-A- 1 500 288
- FR-A- 2 781 409
- US-A- 3 205 534
- US-A- 3 355 763
- US-A- 3 943 214
- PATENT ABSTRACTS OF JAPAN vol. 011, no. 377 (M-649), 9. Dezember 1987 (1987-12-09) & JP 62 148214 A (TERAOKA GIKEN KK), 2. Juli 1987 (1987-07-02)

## Beschreibung

Die Erfindung betrifft einen Extrusionskopf zur Herstellung eines schlauch- oder rohrförmigen Kunststoffstranges gemäss dem Oberbegriff des Patentanspruchs 1. Die Erfindung betrifft auch eine mit einem erfindungsgemässen Extrusionskopf ausgestattete Extrusionsblasmaschine.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung fluider Substanzen, beispielsweise von Getränken, Öl, Reinigungsutensilien, Kosmetika usw., kommen hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Die Herstellung von Kunststoffbehältnissen, insbesondere Kunststoffflaschen, beispielsweise aus Polyethylen oder Polypropylen, erfolgt im Extrusionsblasverfahren, insbesondere in einem Schlauchblasverfahren. Dabei wird zunächst mit Hilfe eines Extrusionskopfes ein ein- oder mehrschichtiger, schlauch- oder rohrförmiger Kunststoffschlauch aus einem vorzugsweise thermoplastischen Kunststoff extrudiert. Der üblicherweise kontinuierlich extrudierte Kunststoffschlauch wird in ein Blasformwerkzeug eingebracht, abgeschnitten, über einen Blasdorn durch Überdruck aufgeblasen und durch Kühlung ausgehärtet. Die dafür eingesetzten Extrusionsblasmaschinen besitzen in der Regel wenigstens einen Extruder für die Zufuhr des Kunststoffmaterials an den Extrusionskopf. Der Ausgang des Extruders ist mit dem Extrusionskopf verbunden, der wenigstens eine Extrusionsdüse aufweist, deren Öffnungsweite regulierbar ist. Für den kontinuierlichen Betrieb der Extrusionsblasmaschine sind bei den bekannten Extrusionsblasmaschinen zwei Stationen mit Blasformen vorgesehen, die abwechselnd vom Extrusionskopf bedient werden. Die Blasformstationen sind dabei zu beiden Seiten des Extruders, einander gegenüberliegend angeordnet und weisen Blasformtische mit den eigentlichen Blasformen auf, die abwechselnd unter den Extrusionskopf bewegt werden, um den extrudierten Schlauch zu empfangen. Gesamthaft bilden der Extruder mit dem Extrusionskopf und die beiden Blasformstationen etwa die Form eines T. Dabei stellt der Extruder mit dem Extrusionskopf den langen T-Strich dar, während die beiden Blasformtische abwechselnd entlang der kurzen Querstrichhälften unter den Extrusionskopf bewegbar sind.

Der Extrusionskopf ist mit dem Ausgang des Extruders verbunden und wird von diesem mit dem vorzugsweise thermoplastischen Kunststoffmaterial versorgt. Am Extrusionskopf ist wenigstens eine Extrusionsdüse vorgesehen. Vielfach ist der Extrusionskopf mit mehreren Extrusionsdüsen ausgestattet, um in einem Arbeitsgang gleichzeitig mehrere Kunststoffschläuche herzustellen, die von einem Mehrfachblaswerkzeug übernommen werden. Jede Extrusionsdüse weist ein Düsenwerkzeug auf, welches einen zentralen Dorn und einen den Dom umgebenden Düsenring besitzt. Der vom Mantel des Dorns und der Innenfläche des Düsenrings begrenzte Ringspalt bildet die Austrittsöffnung der Extrusionsdüse. Der Dom besitzt üblicherweise eine sich zu seinen freien Ende hin kegelförmig erweiternde oder auch verengende Form. Die Innenfläche des Düsenrings ist dabei üblicherweise gleichfalls eine Kegelmantelfläche. Der Neigungswinkel der Innenfläche des Düsenrings gegenüber der Dornachse ist dabei verschieden vom Neigungswinkel der Mantelfläche des Dorns. Durch eine axiale Relativbewegung zwischen dem Dorn und dem Düsenring ist die Öffnungsweite der Austrittsöffnung veränderbar und dadurch die Wanddicke des extrudierten Kunststoffschlauchs steuerbar. Die Relativbewegung erfolgt dabei meist durch ein Heben bzw. Senken des Dorns gegenüber dem unbeweglich angeordneten Düsenring. Aus dem Stand der Technik sind auch Lösungen bekannt, bei denen der Düsenring axial beweglich ist, während der Dom fest angeordnet ist.

Für die axiale Relativbewegung zwischen dem Dorn und dem Düsenring ist ein hydraulischer oder elektrischer Stelltrieb vorgesehen, über den die Relativbewegung gemäss vorgebbaren Kriterien durchführbar ist. Der Stelltrieb wirkt mit dem Dorn oder dem Düsenring zusammen, um die Öffnungsweite der Austrittsöffnung zu regulieren und dadurch die Wanddicke des extrudierten Kunststoffschlauchs gemäss Vorgabe zu modulieren. Mit Hinblick auf die zu bewegende Masse, insbesondere bei einer Höhenverstellung des Düsenrings, auf die Geschwindigkeit und die Genauigkeit der Verstellung sind die für den Stelltrieb eingesetzten Motoren und Getriebe relativ aufwendig und teuer. Vielfach ist es erforderlich, den Extrusionskopf zu wechseln, beispielsweise um die Extrusionsblasmaschine an unterschiedliche Kunststoffe anzupassen, oder um von einem ein- zu einem mehrschichtigen Extrusionskopf zu wechseln, oder um den Extrusionskopf an unterschiedliche Behälterformen, an unterschiedliche Blasformwerkzeuge und dergleichen anzupassen. Die aus dem Stand der Technik bekannten Extrusionsköpfe sind als eine bauliche Einheit ausgebildet, die nur gesamthaft austauschbar ist Daher ist es bei den bekannten Extrusionsblasmaschinen erforderlich, den gesamten Extrusionskopf mit Düsenwerkzeug und Stelltrieb vom Extruder abzuflanschen und durch einen neuen Extrusionskopf zu ersetzen. Der neu montierte Extrusionskopf muss danach an die geänderten Verhältnisse angepasst und gesamthaft neu justiert werden. Berücksichtigt man das enorme Gewicht des Extrusionskopfes, so ist unmittelbar einsichtig, dass der Austausch und die Justierung des gesamten Extrusionskopfes ein sehr zeit- und arbeitsaufwändiger Vorgang ist Der Stelltrieb für das Düsenwerkzeug ist ein fester Bestandteil der aus dem Stand der Technik bekannten Schlauchköpfe und stellt beim Wechseln des Extrusionskopfes einen nicht vernachlässigbaren Kostenaufwand dar. Zudem müssen beim Wechsel der bekannten Schlauchköpfe auch die hydraulischen und/oder elektrischen Installationen für den Stelltrieb neu durchgeführt werden, damit ein zuverlässiger Betrieb der derart umgerüsteten Extrusionsblasmaschine gewährleistet ist.

Der vorliegenden Erfindung liegt daher die Aufgabe zugrunde, diesen Nachteilen der Extrusionsblasmaschinen des Stands der Technik abzuhelfen. Es soll die Voraussetzung für eine Vereinfachung des Wechsels des Extrusionskopfes bei einer Extrusionsblasmaschine geschaffen werden. Aufwändige Justierarbeiten sollen vermieden werden können. Dabei soll der Extrusionskopf derart modifiziert werden, dass ein Wechsel schneller, mit geringerem Auwand und billiger erfolgen kann.

Diese Aufgaben werden erfindungsgemäss durch eine Extrusionskopf zur Herstellung eines rohr- oder schlauchförmigen Kunststoffstranges gelöst, welche die im kennzeichnenden Abschnitt des Patentanspruchs 1 angeführten Merkmale aufweist Vorteilhafte Weiterbildungen und/oder bevorzugte Varianten der Erfindung sind Gegenstand der abhängigen Patentansprüche.

Der erfindungsgemässe Extrusionskopf zur Herstellung eines schlauch- oder rohrförmigen Kunststoffstranges ist mit dem Ausgang eines Extruders verbindbar und weist ein Düsenwerkzeug auf, welches einen Kern und einen Düsenring umfasst. Der Kern und der Düsenring begrenzen einen Öffnungsspalt, dessen Öffnungsweite durch eine über einen Stelltrieb steuerbare axiale Relativbewegung zwischen dem Kern und dem Düsenring veränderbar ist. Der Extrusionskopf umfasst ein Aufhängeteil und ein lösbar damit verbundenes Extrusionsteil, das sämtliche Anschlüsse und Fliesskanäle für die zu extrudierende Masse aufweist und mit dem Düsenwerkzeug ausgestattet ist. Der Stelltrieb ist am Aufhängeteil angeordnet und lösbar mit dem Dorn oder dem Düsenring verbindbar.

Durch die Aufteilung des Extrusionskopfes in ein Aufhängeteil und in ein Extrusionsteil sind die Voraussetzung für einen vereinfachten Austausch gegeben. Das Extrusionsteil ist lösbar mit dem Aufhängeteil verbunden. Dadurch muss beim Wechsel nicht mehr der gesamte Extrusionskopf demontiert und ausgetauscht werden. Es reicht aus, das Extrusionsteil vom Aufhängeteil zu lösen und nur das Extrusionsteil auszutauschen. Sämtliche Anschlüsse und Fliesskanäle für die zu extrudierende Masse und das Düsenwerkzeug sind am austauschbaren Extrusionsteil vorgesehen. Damit entfällt beim Austausch des Extrusionsteils die Notwendigkeit einer neuen Justierung des Düsenwerkzeugs zur Einstellung der erforderlichen Durchflussmengen. Die Kanäle für die fliessfähige Kunststoffmasse und das Düsenwerkzeug sind immer optimal aufeinander abgestimmt. Der Austausch ist auch viel einfacher zu bewerkstelligen, da durch die Aufteilung des Extrusionskopfes in ein Aufhängeteil und in das Extrusionsteil das Gewicht des auszutauschenden Teils deutlich verringert ist Da der Stelltrieb für die Öffnungsweitenverstellung des Ringspalts des Düsenwerkzeugs am Aufhängeteil angeordnet ist, bleibt dieser bei einem Austausch des Extrusionsteils erhalten. Dies bietet abgesehen von einer Gewichtsersparnis auch einen wirtschaftlichen Vorteil. Beim Wechsel des Extrusionsteils müssen nur noch mechanische Verbindungen erstellt werden. Die Erstellung zusätzlicher hydraulischer und/oder elektrischer Verbindungen für den Stelltrieb, die immer eine Fehlerquelle darstellen können, ist nicht mehr erforderlich.

Für eine Verstellung der Wanddicke des extrudierten Kunststoffschlauchs ist der Öffnungsspalt des Düsenwerkzeugs in seiner Weite verstellbar. Dies erfolgt durch eine axiale Relativbewegung zwischen dem Dom und dem Düsenring. Während die Weitenverstellung prinzipiell auch durch eine Verstellung des Düsenrings gegenüber einem ortsfest am Extrusionsteil montierten Dorn erfolgen kann, ist in einer bevorzugten Ausführungsvariante der Erfindung der Dorn das axial verstellbare Düsenglied. Dazu ist der Dorn mit einer Regelstange verbunden, die mit dem Stelltrieb zusammenwirkt und für eine axiale Verstellung des Dorns gegenüber dem ortsfesten Düsenring sorgt Die Regelstange ist dabei mit Vorteil in axialer Verlängerung des Dorns angeordnet und durch das Extrusionsteil geführt. Die Regelstange ist über den Stelltrieb betätigbar, um den Dorn gegenüber dem Düsenring zu heben bzw. zu senken und dadurch die Öffnungsweite des Öffnungsspalts des Düsenwerkzeugs zu verstellen.

Um das Extrusionsteil bei Bedarf sehr einfach austauschen zu können und um andererseits eine zuverlässiges Zusammenwirken des Stelltriebs und der Regelstange zu gewährleisten ist die Verbindung zwischen dem Aufhängeteil und dem Extrusionsteil einerseits und zwischen dem Stelltrieb und der Regelstange andererseits als eine formschlüssige Verbindung ausgebildet. Besonders zweckmässig erweist es sich, wenn die Verbindungen als ineinandergreifende Schienen oder dergleichen korrespondierend ausgebildete Anbindeteile ausgebildet sind.

Für die Kopplung der Regelstange an den Stelltrieb erweist sich eine formschlüssige Verbindung über zwei ineinandergreifende, etwa L-förmig ausgebildete Regelbalken als sehr zweckmässig. Die formschlüssige Verbindung über etwa L-förmig ausgebildete Regelbalken ist insbesondere bei einem Extrusionsteil mit mehreren Düsenwerkzeugen montagetechnisch von Vorteil. Am extrusionsteilseitgen Regelbalken ist dabei eine Anzahl Regelstangen montiert, die der Anzahl der Düsenwerkzeuge entspricht. Die Kopplung der Regelstangen mit dem Stelltrieb erfolgt dabei über den gemeinsamen Regelbalken. Da die verschiedenen Düsenwerkzeuge alle simultan gleichartige Kunststoffschläuche extrudieren, reicht es aus, den Regelbalken axial in der Höhe zu verstellen, um dadurch bei allen Düsenwerkzeugen die Öffnungsweite im gewünschten Umfang zu verstellen.

In einer sehr einfachen und zweckmässigen Ausführungsvariante des Düsenwerkzeugs sind die den Öffnungsspalt begrenzenden Flächen des Dorns und/oder des Düsenrings konusflächenartig ausgebildet Dabei weisen sie jeweils eine voneinander verschiedene Konizität auf.

In einer vorteilhaften Ausführungsvariante der Erfindung ist am Extrusionsteil wenigstens eine Andockstelle für den Ausgang eines Extruders vorgesehen. Das Aufhängeteil ist frei von Kanälen und Anschlüssen für die zu extrudierende Masse. Dadurch können spezielle Dichtungsvorkehrungen zwischen dem Aufhängeteil und dem Extrusionsteil entfallen. Das verflüssigte Kunststoffgranulat muss nur im Extrusionsteil in fliess- und extrudierbarem Zustand gehalten werden. Spezielle Vorkehrungen am Aufhängeteil sind nicht erforderlich.

Eine vorteilhaft und einfach an die erforderlichen Gegenbenheiten anpassbare Extrusionsblasmaschine weist einen Extrusionskopf, insbesondere einen in ein Aufhängeteil und ein Extrusionsteil aufgeteilten Extrusionskopf gemäss einem der vorangehenden Anprüche auf. Dabei ist das Aufhängeteil in einem Gehäuseteil der Maschine montiert und in alle drei Koordinatenrichtungen bewegbar angeordnet. Bei dieser Ausführungsvariante der Extrusionsblasmaschine ist das Extrusionsteil gelenkig mit dem Extruder verbunden.

In einer vorteilhaften Weiterbildung der mit einem erfindungsgemässen Extrusionskopf ausgestatteten Extrusionsblasmaschine ist der Extruder gelenkig gelagert, um die Beweglichkeit des Extrusionsteils in alle drei Koordinatenrichtungen zu erleichtern.

Im folgenden wird die Erfindung unter Bezugnahme auf die schematischen Zeichnungen näher erläutert. Es zeigen in nicht massstabsgetreuer, schematischer Darstellung.
- Fig. 1: eine Prinzipdarstellung einer Extrusionsblasmaschine mit einer Extrusionseinheit und zwei Blasformstationen;
- Fig. 2: eine schematische, axial geschnittene Darstellung eines Extrusionskopfes mit einem Aufhängeteil und einem Extrusionsteil;
- Fig. 3: und 4 zwei schematische Darstellungen eines mit einem Extruder verbundenen Extrusionsteils.

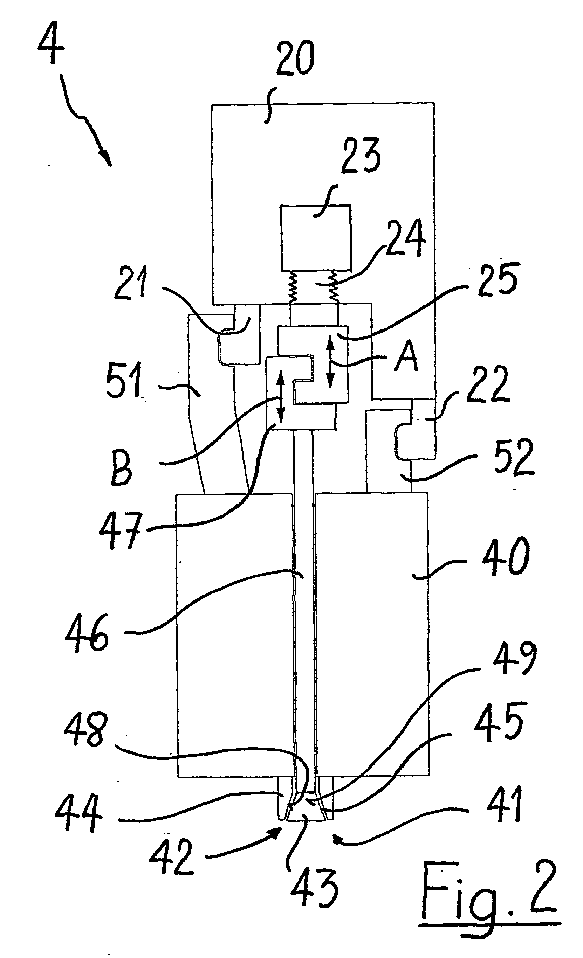

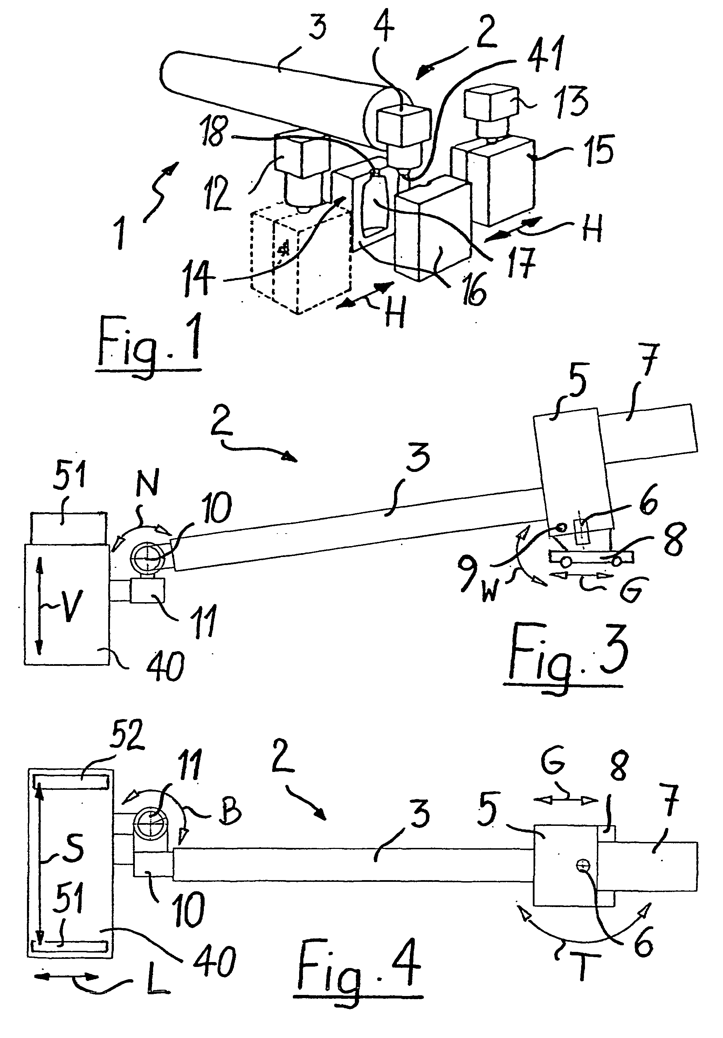

Die in Fig. 1 nur im Prinzip dargestellte Extrusionsblasmaschine ist gesamthaft mit dem Bezugzeichen 1 versehen. Der Aufbau derartiger Extrusionblasmaschinen ist hinlänglich bekannt und beispielsweise in "Blow molding händbook, edited by Donald V. Rosato and Dominick V. Rosato, 1989, ISBN 1-56990-089-2, Library of Congress Catalogue Card Number 88-016270" beschrieben. Die Darstellung in Fig. 1 beschränkt sich daher auf die für das Verständnis unbedingt erforderlichen Bestandteile der Extrusionsblasmaschine 1. Beispielsweise handelt es sich dabei um eine Zweistationenblasmaschine, wie sie auch von der Anmelderin angeboten wird. Sie weist ein Extrusionseinheit 2 und zwei Blasformstationen 12,13 auf. Die Extrusionseinheit 2 umfasst einen Extruder 3 für Kunststoffgranulat und einen damit verbundenen Extrusionskopf 4, der wenigstens eine Extrusionsdüse 41 aufweist. Die Längserstreckung des Extruders 3 definiert eine Längsrichtung der Extrusionsblasmaschine 1. Die Blasformstationen 12, 13 besitzen jeweils einen Blaskopf mit einem Blasdorn. Jede Blasformstation 12, 13 ist mit einem Blasformtisch 14, 15 ausgestattet, in dem die Formwerkzeuge 16 montiert sind. Die Formwerkzeuge 16 umschliessen jeweils eine Kavität 17, die der Form des herzustellenden Behälters, beispielsweise einer Flasche entspricht, und besitzen an ihrer dem Extrusionskopf 4 zugewandten Oberseite eine Öffnung 18. Die Blasformtische 14, 15 sind abwechselnd aus ihren seitlichen Endpositionen in eine Position verschiebbar, in der sich die Öffnung 18 des Formwerkzeugs 16 in vertikaler Überdeckung mit der Extrusionsdüse 41 befindet. Die seitliche Verschiebung der Blasformtische 14, 15 erfolgt dabei im wesentlichen senkrecht zur Längsrichtung der Extrusionsblasmaschine 1.

Das über den Extruder 3 zugeführten Kunststoffgranulat wird im Extruder 3 und/oder im Extrusionskopf 4 aufgeschmolzen und an der Extrusionsdüse 41 als endloser Schlauch extrudiert. Der Schlauch kann ein- oder mehrschichtig extrudiert werden. Dazu können auch noch zusätzliche Extruder vorgesehen sein, welche die erforderlichen unterschiedlichen Kunststoffmaterialien zum Extrusionskopf 4 transportieren. Die Blasformtische 14, 15 mit den Formwerkzeugen 16 werden abwechselnd aus ihren Endpositionen in den Blasformstationen 12, 13 seitlich unter den Extrusionskopf 4 bewegt, die Formwerkzeuge 16 geöffnet und ein Stück des extrudierten Schlauchs abgeholt. Danach wird der jeweilige Blasformtisch 14, 15 wieder in seine Endposition in der Blasformstation 12, 13 zurückbewegt. Dort wird dann mit Hilfe eines durch die Öffnung 18 in die Kavität eingefahrenen Blasdorns der Behälter aufgeblasen. Der fertige Behälter wird ausgestossen und der Zyklus wiederholt Während in der einen Blasformstation 12 ein Behälter aufgeblasen wird, wird der Blasformtisch 15 der zweiten Blasformstation 13 seitlich unter den Extrusionskopf 4 bewegt, um ein weiteres Stück des extrudierten Schlauchs abzuholen. Auf diese Weise ist ein kontinuierlicher Betrieb ermöglicht

Fig. 2 ist eine schematische Darstellung eines erfindungsgemäss ausgebildeten Extrusionskopfes 4 in axial geschnittener Darstellung. Es ist ersichtlich, dass der Extrusionskopf 4 ein Aufhängeteil 20 und ein lösbar damit verbundenes Extrusionsteil 40 umfasst. Die beiden Teile sind über aufhängungsseitige Anbindeteile 21, 22 und extrusionsteilseitige Anbindeelemente 51, 52 formschlüssig miteinander verbunden. Beispielsweise sind die aufhängungsseitigen Anbindeteile 21, 22 von der Unterseite des Aufhängeteils 20 abragende, L-förmig abgewinkelte Stahlprofile, die in korrespondierende Nuten der von der Oberseite des Extrusionsteils abragenden Anbindeelemente 51, 52 eingreifen. Zur Montage des Extrusionsteiles 40 werden die Stahlprofile ineinander geschoben.

Das Extrusionsteil 40 ist mit der Extrusionsdüse 41 ausgestattet. Diese wird von einem Düsenwerkzeug 42 gebildet, welches einen Dorn 43 und einen den Dorn umgebenden Düsenring 44 umfasst. Die Innenfläche 48 des Düsenrings 44 und die Mantelfläche 49 des Dorns 43 begrenzen einen ringförmigen Öffnungsspalt 45 der Extrusionsdüse 41, durch den der Kunststoffschlauch austritt. Mit Vorteil sind die beiden den Öffnungsspalt 45 begrenzenden Flächen 48, 49 konisch ausgebildet. Dabei weisen die Innenfläche 48 des Düsenrings 44 und die Mantelfläche 49 des Doms 43 verschiedene Konizitäten auf. Die Weite des Öffnungspaltes 45 ist durch eine axiale Relativbewegung zwischen dem Dorn 43 und dem Düsenring 44 variierbar. Sämtliche Anschlüsse und Fliesskanäle für den verflüssigten Kunststoff sind im Extrusionsteil 40 des Extrusionskopfes 4 angeordnet. Aus Gründen der Übersichtlichkeit wurde in Fig. 2 jedoch auf deren Darstellung verzichtet.

Bei dem in Fig. 2 dargestellten Ausführungsbeispiel erfolgt die Verstellung der Öffnungsweite durch eine axiale Verstellung des Doms 43 gegenüber dem ortsfest am Extrusionsteil 40 angeordneten Düsenring 44. Dazu ist der Dorn 43 mit einer Regelstange 46 verbunden, die sich axial durch das Extrusionsteil 40 erstreckt und an ihrem aufhängeteilseitigen Ende an einem Regelbalken 47 befestigt ist. Der Regelbalken 47 des Extrusionsteils 40 greift formschlüssig in einen korrespondierenden aufhängeteilseitigen Regelbalken 25 ein. Beispielsweise sind die Regelbalken 47, 25 als etwa L-förmige Schienen ausgebildet, die der Länge nach ineinander schieb- oder hängbar sind. Der aufhängeteilseitige Regelbalken 25 ist an einem Hubteil 24 befestigt, das über einen elektrischen oder hydraulischen Stelltrieb, der in Fig. 2 mit dem Bezugszeichen 23 angedeutet ist, axial in der Höhe verstellbar ist. Dies ist in Fig. 2 durch den Doppelpfeil A angedeutet. Der Stelltrieb 23 ist am Aufhängeteil 20 angeordnet und mit einer Steuereinheit verbunden. Durch die formschlüssige Kopplung wird die axiale Höhenverstellung der Regelbalken 25, 47 auf die Regelstange 46 und den Dorn 43 übertragen und die Öffnungsweite des Öffnungsspalts 45 verändert. Dies ist in Fig. 2 durch den Doppelpfeil B angedeutet. Dadurch ist die Wanddicke des extrudierten Kunststoffschlauchs steuerbar. Bei einem Mehrfachwerkzeug können am Regelbalken 47 mehrere Regelstangen montiert sein, die ihrerseits mit mehreren Domen verbunden sind. Auf diese Weise sind gleichzeitig mehrere Kunststoffschläuche erzeugbar. Für die Variation der Öffnungsweite der Extrusionsdüsen reicht ein einziger Stelltrieb 23 aus, über den der aufhängteilseitige Regelbalken 25 axial hebund senkbar ist.

Der Ausgang des Extruders ist an das Extrusionsteil 40 angeflanscht. Fig. 3 und 4 zeigen eine derartige Extrusionseinheit 2 einer erfindungsgemässen Extrusionsblasmaschine schematisch in Seiten- und Draufsicht. Die Extrusionseinheit 2 wird vom Extruder 3 und dem mit dem Ausgang des Extruders 3 verbundenen Extrusionsteil 40 gebildet. Die Extrudereinheit 2 ist derart ausbalanciert, dass ihr Schwerpunkt im wesentlichen im Bereich des Getriebes für den Extruder 3 liegt. Das Getriebe ist dabei in einem Getriebegehäuse 5 angeordnet Eine Antriebseinheit 7 für den Extruder 3 ist als Gegengewicht zum Extruder 3 an das Getriebegehäuse 5 angeflanscht.

Die gesamte Extrusionseinheit 2 ist gelenkig im Gehäuse der Extrusionsblasmaschine gelagert und auch in Längsrichtung verschiebbar. Die gelenkige Lagerung erfolgt im Bereich des Getriebes für den Extruder 3. Dazu ist am Getriebegehäuse 5 ein vertikales Extrudergelenk 9 vorgesehen, welches eine vertikale Neigung des Extruders 3 erlaubt. Die vertikale Beweglichkeit ist in Fig. 3 durch den Doppelpfeil W angedeutet. Das Getriebegehäuse 5 ist auf einem Führungsschlitten 8 angeordnet und um eine Achse 6 im wesentlichen horizontal verschwenkbar. Die horizontale Verschwenkbarkeit ist in der Draufsicht der Fig. 4 durch den Doppelpfeil T angedeutet. Der Führungsschlitten 8 ist beispielsweise über Rollen oder Räder auf Schienen geführt, die auf einer Plattform der Extrusionsblasmaschine vorgesehen sind und in Längsrichtung der Maschine verlaufen. Der Führungsschlitten 8 ermöglicht eine einfache, kontrollierte Verschiebbarkeit der Extrusionseinheit 2 in Längsrichtung, was in Fig. 3 und 4 jeweils durch den Doppelpfeil G angedeutet ist. Durch die gewählte Art der Lagerung ist die Extrusionseinheit 2 vertikal und lateral beweglich und auch in Längsrichtung der Extrusionsblasmaschine kontrolliert verschiebbar.

Das Extrusionsteil 40 ist gelenkig mit dem Extruder 3 verbunden. Die gelenkige Anbindung weist zwei Freiheitsgrade auf und ermöglicht eine vertikale und eine im wesentlichen laterale Verschwenkbarkeit des Extrusionsteils 40 gegenüber dem Extruder 3. Die gelenkige Anbindung ist beispielsweise von zwei im wesentlichen senkrecht zueinander verlaufenden Rohrgelenken 10, 11 gebildet. Die vertikale Neigbarkeit des Extrusionsteils 40 im vertikalen Rohrgelenk 10 ist in der Seitenansicht der Fig. 3 durch den Doppelpfeil N angedeutet. In Fig. 4 bezeichnet der Doppelpfeil B die horizontale Verschwenkbarkeit des Extrusionsteils 40 um das Rohrgelenk 11. Das Extrusionsteil 40 ist mit dem nicht dargestellten Aufhängeteil formschlüssig verbunden, das in einem Rahmenteil des Gehäuses der Extrusionsblasmaschine derart aufgehängt ist, dass eine Verstellbarkeit in alle drei Koordinatenrichtungen gegeben ist. Durch die gelenkige Anbindung des Extrusionsteils 40 an den Extruder 3 einerseits und durch die gelenkige und in Längsrichtung verschiebbare Lagerung der Extrusionseinheit 2 werden die Bewegungen des Extrusionsteils 40 in Kipp-/Schwenkbewegungen des Extruders 3 umgesetzt, und es ergeben sich folgende Bewegungsabläufe:
- eine vertikale Bewegung des Extrusionsteils 40 in Richtung des Doppelpfeils V führt zu einer kleinen Neigung gemäss Doppelpfeil N im im Rohrgelenk 10 und einer kleinen Neigung W im Extrudergelenk 9 sowie einer Längsverschiebung gemäss Pfeil G;
- eine horizontale Bewegung des Extrusionsteils 40 senkrecht zur Längsrichtung in Richtung des Doppelpfeils S führt zu einer Drehung gemäss Doppelpfeil B im Rohrgelenk 11, eine Drehung T im Extrudergelenk 6 sowei einer Längsverschiebung G;
- eine horizontale Bewegung des Extrusionsteils 40 in Längsrichtung L resultiert in einer Längsverschiebung G der Schlittenlagerung der Extrusionseinheit 2.

## Patentansprüche

1. Extrusionskopf zur Herstellung eines schlauch- oder rohrförmigen Kunststoffstranges, die mit dem Ausgang eines Extruders (3) verbindbar ist und ein Düsenwerkzeug (42) aufweist, welches einen Kern (43) und einen Düsenring (44) umfasst, die einen Öffnungsspalt (45) begrenzen, dessen Öffnungsweite durch eine über einen Stelltrieb (23) steuerbare axiale Relativbewegung (A, B) zwischen dem Kern (43) und dem Düsenring (44) veränderbar ist, **dadurch gekennzeichnet, dass** der Extrusionskopf ein Aufhängeteil (20) und ein lösbar damit verbundenes Extrusionsteil (40) umfasst, welches sämtliche Anschlüsse und Fliesskanäle für die zu extrudierende Kunststoffmasse aufweist und mit dem Düsenwerkzeug (42) ausgestattet ist, und der Stelltrieb (23) am Aufhängeteil (20) angeordnet und lösbar mit dem Dorn (43) oder dem Düsenring (44) verbindbar ist.

2. Extrusionskopf nach Anspruch 1, **dadurch gekennzeichnet, dass** der Stelltrieb (23) über eine Regelstange (46) mit dem Dorn (43) verbunden ist und die Verstellung der Öffnungsweite des Öffnungsspalts (45) des Düsenwerkzeugs (42) durch eine axiale Verstellung des Doms (43) erfolgt.

3. Extrusionskopf nach Anspruch 2, **dadurch gekennzeichnet, dass** die Verbindung zwischen dem Aufhängeteil (20) und dem Extrusionsteil (40) und zwischen dem Stelltrieb (23) und der Regelstange (46) eine formschlüssige Verbindung ist.

4. Extrusionskopf nach Anspruch 3, **dadurch gekennzeichnet, dass** die Verbindung zwischen dem Stelltrieb (23) und der Regelstange (46) über zwei formschlüssig ineinandergreifende Regelbalken (25,47) erfolgt.

5. Extrusionskopf nach Anspruch 4, **dadurch gekennzeichnet, dass** das Extrusionsteil (40) mehrere Düsenwerkzeuge (42) aufweist und am extrusionsteilseitigen Regelbalken (47) eine Anzahl Regelstangen (46) montiert ist, die der Anzahl der Düsenwerkzeuge (42) entspricht.

6. Extrusionskopf nach einem der vorangehenden Ansprüche, **dadurch gekennzeichnet, dass** die den Öffnungsspalt (45) begrenzenden Flächen (48, 49) des Dorns (43) und/oder des Düsenrings (44) konusflächenartig ausgebildet sind und eine voneinander verschiedene Konizität aufweisen.

7. Extrusionskopf nach einem der vorangehenden Ansprüche, **dadurch gekennzeichnet, dass** das Extrusionsteil (40) mit wenigstens einer Andockstelle für den Ausgang eines Extruders (3) ausgestattet ist.

8. Extrusionsblasmaschine mit einem Extrusionskopf gemäss einem der vorangehenden Ansprüche.

9. Extrusionsblasmaschine nach Anspruch 8, **dadurch gekennzeichnet, dass** das Aufhängeteil (20) in einem Gehäuseteil der Maschine montiert, in alle drei Koordinationrichtungen bewegbar ist und das Extrusionsteil (40) gelenkig mit dem Extruder (3) verbunden ist.

10. Extrusionsblasmaschine nach Anspruch 9, **dadurch gekennzeichnet, dass** der Extruder (3) gelenkig gelagert ist.

## Claims

1. An extrusion head for producing a plastic strand in the form of a flexible or rigid tube, which can be made to communicate with the outlet of an extruder (3) and has a nozzle tool (42) that includes a core (43) and a nozzle ring (44), which define an opening gap (45) whose opening width can be varied by means of an axial relative motion (A, B) between the core and the nozzle ring (44) that is controllable via an actuating drive (23), **characterized in that** the extrusion head includes a suspension element (20) and an extrusion element (40), detachably connected to the suspension element, which extrusion element has all the connections and flow channels for the plastic composition to be extruded and is equipped with the nozzle tool (42), and the actuating drive (23) is disposed on the suspension element (20) and is detachably connectable to the mandrel (43) or to the nozzle ring (44).

2. The extrusion head of claim 1, **characterized in that** the actuating drive (23) is connected to the mandrel (43) via a control rod (46), and the adjustment of the opening width of the opening gap (45) of the nozzle tool (42) is effected by means of an axial adjustment of the mandrel (43) .

3. The extrusion head of claim 2, **characterized in that** the connection between the suspension element (20) and the extrusion element (40) and between the actuating drive (23) and the control rod (46) is a positive-engagement connection.

4. The extrusion head of claim 3, **characterized in that** the connection between the actuating drive (23) and the control rod (46) is effected via two control bars (25, 47) positively engaging one another.

5. The extrusion head of claim 4, **characterized in that** the extrusion element (40) has a plurality of nozzle tools (42), and a number of control rods (46) corresponding to the number of nozzle tools (42) is mounted on the control bar (47) located toward the extrusion element.

6. The extrusion head of one of the foregoing claims, **characterized in that** the faces (48, 49) of the mandrel (43) and/or of the nozzle ring (44) that define the opening gap (45) are embodied in the manner of conical faces and have a different conicity from one another.

7. The extrusion head of one of the foregoing claims, **characterized in that** the extrusion element (40) is equipped with at least one docking point for the outlet of an extruder (3).

8. An extrusion blow molding machine having an extrusion head of one of the foregoing claims.

9. The extrusion blow molding machine of claim 8, **characterized in that** the suspension element (20) is mounted in a housing part of the machine and is movable in all three coordinate directions, and the extrusion element (40) is pivotably connected to the extruder (3).

10. The extrusion blow molding machine of claim 9, **characterized in that** the extruder (3) is pivotably supported.

## Revendications

1. Tête d'extrusion pour la réalisation d'un brin de matière plastique en forme de paraison tubulaire, qui peut être assemblée à la sortie d'une extrudeuse (3) et comporte une filière d'extrusion (42), qui est formée par un noyau (43) et une bague de filière (44), qui délimitent une fente de passage (45) dont la largeur d'ouverture peut être modifiée par un mouvement relatif axial (A, B) entre le noyau (43) et la bague de filière (44), commandé par un mécanisme de commande (23), **caractérisée en ce que** la tête d'extrusion comprend une partie de suspension (20) et une partie d'extrusion (40), qui est assemblée de manière amovible avec celle-ci et comporte tous les raccords et canaux d'écoulement pour la matière plastique à extruder et qui est équipée de la filière d'extrusion (42), et le mécanisme de commande (23) est agencé au niveau de la partie de suspension (20) et peut être relié de manière amovible au poinçon (43) ou à la bague de filière (44).

2. Tête d'extrusion selon la revendication 1, **caractérisée en ce que** le mécanisme de commande (23) est relié au poinçon (43) par l'intermédiaire d'une tige de réglage (46) et le réglage de la largeur d'ouverture de la fente de passage (45) de la filière d'extrusion (42) est effectué par un déplacement axial du poinçon (43).

3. Tête d'extrusion selon la revendication 2, **caractérisée en ce que** l'assemblage entre la partie de suspension (20) et la partie d'extrusion (40) et celui entre le mécanisme de commande (23) et la tige de réglage (46) sont des assemblages par conjugaison de forme.

4. Tête d'extrusion selon la revendication 3, **caractérisée en ce que** l'assemblage entre le mécanisme de commande (23) et la tige de réglage (46) est effectué au moyen de deux barres de réglage (25, 47) entrant en prise par conjugaison de forme l'une dans l'autre.

5. Tête d'extrusion selon la revendication 4, **caractérisée en ce que** la partie d'extrusion (40) comporte plusieurs filières d'extrusion (42) et une pluralité de tiges de réglage (46), dont le nombre correspond au nombre de filières d'extrusion (42), est montée sur la barre de réglage (47) du côté de la partie d'extrusion.

6. Tête d'extrusion selon l'une quelconque des revendications précédentes, **caractérisée en ce que** les surfaces (48, 49) du poinçon (43) et/ou de la bague de filière (44), délimitant la fente de passage (45), sont des surfaces coniques et possèdent chacune une conicité différente.

7. Tête d'extrusion selon l'une quelconque des revendications précédentes, **caractérisée en ce que** la partie d'extrusion (40) est munie d'au moins une zone d'insertion pour la sortie d'une extrudeuse (3).

8. Extrudeuse-souffleuse munie d'une tête d'extrusion selon l'une quelconque des revendications précédentes.

9. Extrudeuse-souffleuse selon la revendication 8, **caractérisée en ce que** la partie de suspension (20) est montée dans un carter de la machine, est mobile dans les trois directions de coordonnées, et la partie d'extrusion (40) est assemblée de manière articulée avec l'extrudeuse (3).

10. Extrudeuse-souffleuse selon la revendication 9, **caractérisée en ce que** l'extrudeuse (3) est montée de manière articulée.
